# EUROPÄISCHE PATENTSCHRIFT

(11) **EP 0 789 848 B1**
(45) Veröffentlichungstag und Bekanntmachung des Hinweises auf die Patenterteilung: **28.04.1999**
(21) Anmeldenummer: 95937042.0
(22) Anmeldetag: 01.11.1995
(51) Int. Cl.: G01S 15/89, B60S 3/04

(54) **VERFAHREN UND VORRICHTUNG ZUR KONTURERFASSUNG EINES FAHRZEUGS FÜR EINE FAHRZEUGREINIGUNGSANLAGE**
PROCESS AND DEVICE FOR SENSING THE CONTOUR OF A VEHICLE IN A CAR WASH
PROCEDE ET DISPOSITIF DE DETECTION DU CONTOUR D'UN VEHICULE DANS UNE STATION DE LAVAGE DE VEHICULES

(30) Priorität: 05.11.1994 DE 4439583
(43) Veröffentlichungstag der Anmeldung: 20.08.1997
(73) Patentinhaber: Alfred Kärcher GmbH & Co., 71364 Winnenden (DE)
(72) Erfinder: VETTER, Kurt, D-73642 Welzheim (DE); KRAUTTER, Jürgen, D-86836 Untermeitingen (DE)
(74) Vertreter: Böhme, Ulrich, Dr. Dipl.-Phys.
(86) Internationale Anmeldenummer: EP9504280
(87) Internationale Veröffentlichungsnummer: WO9614592

(56) Entgegenhaltungen:
- EP-A- 0 283 446
- US-A- 4 620 285
- US-A- 4 995 136

## Beschreibung

Die Erfindung betrifft ein Verfahren zur Konturerfassung eines Fahrzeugs für eine Fahrzeugreinigungsanlage, bei dem ein Sender eine Strahlung in Richtung auf das Fahrzeug aussendet, die von einem relativ zum Sender in unveränderlicher Lage angeordneten Empfänger aufgenommen wird, und bei dem das Fahrzeug und der Sender unter Erfassung der jeweiligen Koordinaten ihrer Relativposition relativ zueinander verschoben werden, wobei die Strahlung bei unterschiedlichen Relativpositionen des Senders und des Fahrzeugs von diesem unterschiedlich beeinflußt wird.

Weiterhin betrifft die Erfindung eine Vorrichtung zur Erfassung der Kontur eines Fahrzeugs mit einem eine Strahlung in Richtung auf das Fahrzeug aussendenden Sender, einem die Strahlung aufnehmenden, relativ zum Sender in unveränderlicher Lage angeordneten Empfänger, einer Positionsmeßeinrichtung zur Bestimmung der jeweiligen Position des Fahrzeugs relativ zum Sender und einer Recheneinheit, der die bei einer Relativverschiebung zwischen Sender und Fahrzeug durch das Fahrzeug unterschiedlich beeinflußten Ausgangssignale des Empfängers und die der Relativposition des Senders und des Fahrzeugs entsprechenden Ausgangssignale der Positionsmeßeinrichtung zugeführt werden.

Es ist beispielweise bekannt, zur Konturerfassung Lichtschranken zu verwenden, die Licht aussenden, das nur dann auf entsprechende Empfänger auftrifft, wenn zwischen Sender und Empfänger kein Teil des Fahrzeugs angeordnet ist. Dadurch läßt sich die Kontur des Fahrzeugs erfassen, wenn das Fahrzeug an Sender und Empfänger vorbeibewegt wird.

Es sind auch Ultraschallsensoren zu diesem Zweck bekannt, die einen Ultraschallstrahl direkt auf das Fahrzeug richten und den Abstand des Fahrzeugs vom Sender bestimmen (US-A-4995136). Dabei ergeben sich jedoch Schwierigkeiten dann, wenn der Strahl auf eine nicht senkrecht zum Strahl stehende Fläche trifft, da dann kein Strahl auf den Empfänger reflektiert werden kann, eine Messung muß daher unterbleiben.

Es ist Aufgabe der Erfindung, ein Verfahren und eine Vorrichtung zur Konturerfassung eines Fahrzeugs so auszugestalten, daß bei unterschiedlich geformten Fahrzeugoberflächen trotzdem mit hoher Genauigkeit die Kontur des Fahrzeugs über seine gesamten Abmessungen bestimmt werden kann.

Diese Aufgabe wird bei einem Verfahren der eingangs beschriebenen Art erfindungsgemäß dadurch gelöst, daß der Sender einen Strahl aussendet, der um eine Drehachse verschwenkt wird und der bei dieser Verschwenkbewegung das Fahrzeug abtastet, daß der Empfänger so angeordnet wird, daß er den Strahl nur empfängt, wenn dieser nach Reflexion an der Oberfläche des Fahrzeugs entgegengesetzt zu seiner Aussenderichtung reflektiert wird, daß man bei jedem Auftreffen von Strahlung auf den Empfänger aus der Laufzeit des Strahls zwischen Sender und Empfänger und aus dem momentanen Verschwenkwinkel des Strahls die Koordinaten des Orts der Reflexion relativ zum Sender bestimmt und daß man aus diesen Koordinaten und den momentanen Koordinaten des Fahrzeugs relativ zum Sender den Ort der Reflexion am Fahrzeug bestimmt und abspeichert.

Bei diesem Verfahren wird das Fahrzeug von dem über das Fahrzeug verschwenkten Strahl des Senders an den unterschiedlichsten Stellen getroffen. Normalerweise wird der Strahl beim Auftreffen auf die Oberfläche des Fahrzeugs unter einem Winkel reflektiert, der von 180° abweicht, das heißt der Strahl trifft in den meisten Fällen nicht genau senkrecht auf die Fahrzeugoberfläche.

Es gibt jedoch längs des überstrichenen Wegs gelegentlich Stellen, in denen eine senkrechte Reflexion des auftreffenden Strahls erfolgt, so dap der Empfänger Strahlung aufnimmt. In diesen Fällen kann der Ort der Reflexion durch eine in diesem Augenblick erfolgende Messung des Strahlwinkels einerseits und der Laufdauer des Strahls andererseits bestimmt werden, denn daraus ergeben sich einmal der Abstand der Reflexionsstelle vom Sender und zum andere deren Winkellage. Außerdem ist auch klar, daß die Auftreffstelle in der Ebene liegen muß, in der der Strahl bei der Verschwenkbewegung bewegt wird. Damit ist die Position der Reflexionsstelle relativ zum Sender genau festgelegt. Da durch die Positionsmeßeinrichtung außerdem die Relativposition des Fahrzeugs zum Sender bekannt ist, läßt sich auch ohne weiteres bestimmen, an welcher Stelle des Fahrzeugs die Reflexionsstelle gelegen hat, und dabei handelt es sich um eine Stelle an der Oberfläche des Fahrzeugs, da diese den auftreffenden Strahl reflektiert hat. Man erhält auf diese Weise beim Überstreichen des Fahrzeugs eine genaue Positionsbestimmung an all den Stellen, an denen der Strahl senkrecht auf die Fahrzeugoberfläche auftrifft.

Bei jeder Verschwenkbewegung werden üblicherweise nur sehr wenige derartige Positionierungen festgestellt werden können, da eine genau senkrechte Reflexion nur an sehr wenigen Stellen auftritt. Durch die Bewegung des Fahrzeugs relativ zum Sender ändert sich aber laufend der Winkel, unter dem der Strahl an bestimmten Stellen des Fahrzeugs auftrifft, so daß insbesondere bei einer wiederholten Überstreichung des Fahrzeugs mit dem Strahl immer wieder andere Stellen der Fahrzeugoberfläche um 180° reflektieren. Wenn bei einem Durchlauf des Fahrzeugs am Sender der Strahl das Fahrzeug genügend häufig überstreicht, erhält man auf diese Weise über die gesamte Abmessung des Fahrzeugs eine große Anzahl von Konturmeßpunkten, die es ermöglichen, die Kontur aus einer Vielzahl derartig zufälliger Reflexionsstellen zuverlässig zu bestimmen.

Bei einer bevorzugten Ausführungsform kann vorgesehen sein, daß man den Strahl um eine Drehachse verschwenkt, die in einer senkrecht zur Richtung der Relativverschiebung zwischen Sender und Fahrzeug stehenden Ebene liegt. Durch die Verschiebung des Fahrzeugs parallel zur eigenen Längsrichtung fällt dabei der Strahl bei jeder Verschwenkbewegung unter einem anderen Winkel auf die gleichen Teile der Fahrzeugoberfläche, so daß bei jeder derartigen Verschwenkbewegung andere Teile der Fahrzeugoberfläche die Bedingung für die Reflexion um 180° erfüllen und ausgemessen werden.

Günstig ist es, wenn man als Strahlung Ultraschallstrahlung verwendet, diese hat insbesondere den Vorteil, daß eine Reflexion auch an lichtdurchlässigen Oberflächenteilen erfolgt, also an Fensterscheiben.

Besonders vorteilhaft ist es, wenn man Sender und Empfänger stationär anordnet und das Fahrzeug an ihnen vorbeibewegt, wobei der vom Sender ausgesandte Strahl des Fahrzeug vollständig überstreicht. Beispielsweise können Sender und Empfänger an einem Portal angeordnet sein, unter dem das Fahrzeug hindurchbewegt wird, wobei die Relativposition des Fahrzeugs zum Portal bestimmt wird. Dieses Portal kann dann auch noch Reinigungswerkzeuge enthalten, die entsprechend den gewonnenen Konturdaten gesteuert werden können.

Bei einer bevorzugten Ausführungsform ist vorgesehen, daß man den Strahl zusätzlich zu Kontrollzwecken auf einen relativ zu Sender und Empfänger stationären Reflektor richtet, der den Strahl in sich reflektiert. Diese Reflexionsfläche hat vom Sender einen genau definierten Abstand und diesem gegenüber eine genau definierte Winkellage, so daß eine Eichung der Positionsbestimmung möglich ist, wenn die genauen Positionsdaten des Reflektors relativ zum Sender bekannt sind.

Günstig ist es, wenn man die Verschwenkbewegung des Strahls durch einen verschwenkbaren Spiegel erzeugt. Es ist dann möglich, den Sender selbst stationär anzuordnen, so daß eine insgesamt sehr vereinfachte Konstruktion entsteht.

Bei einer Vorrichtung der eingangs beschriebenen Art wird die beschriebene Aufgabe erfindungsgemäß dadurch gelöst, daß der Sender durch einen Drehantrieb derart um eine Drehachse verschwenkt wird, daß der Strahl das Fahrzeug dabei überstreicht, daß der Empfänger so relativ zum Sender angeordnet ist, daß er nur dann Strahlung empfängt, wenn der Strahl entgegengesetzt zu seiner Aussenderichtung reflektiert wird, daß eine Winkelmeßeinrichtung für den Verschwenkwinkel des Strahls und eine Laufzeitmeßeinrichtung für den vom Sender zum Empfänger gelangenden Strahl vorgesehen ist, deren Ausgangssignale der Recheneinheit zugeführt werden, und daß in dieser beim Auftreffen von Strahlung auf dem Empfänger aus den Momentanwerten der Winkelmeßeinrichtung, der Laufzeitmeßeinrichtung und der Positionsmeßeinrichtung der Ort der Reflexion am Fahrzeug bestimmt und gespeichert wird.

Günstig ist es, wenn die Drehachse in einer senkrecht zur Richtung einer Relativverschiebung zwischen Sender und Fahrzeug stehenden Ebene liegt.

Insbesondere ist der Sender ein Ultraschallsender.

Bei einer bevorzugten Ausführungsform ist vorgesehen, daß der Sender und Empfänger am selben Ort angeordnet sind, insbesondere können Sender und Empfänger identisch sein.

Besonders vorteilhaft ist es, wenn gemäß einer bevorzugten Ausführungsform Sender und Empfänger in einer senkrecht auf der Verschieberichtung von Fahrzeug und Sender stehenden Ebene zusätzlich verschiebbar sind und wenn auch diese Positionen durch die Positionsmeßeinrichtung erfaßt werden. So kann beispielsweise die Höhe des Senders über dem Fahrzeug geändert werden oder die seitliche Lage. Durch die Verstellung der Höhe kann erreicht werden, daß der Auftreffwinkel der Strahlung an bestimmten Stellen der Fahrzeugoberfläche verschieden wird, so daß auch bei schwierigen Konturen immer wieder andere Oberflächenteile ausgemessen werden können. Die seitliche Verschiebung des Senders ermöglicht es, die Ebene quer zum Fahrzeug zu verschieben, in welcher der Strahl auftrifft. Dadurch läßt sich bei wiederholtem Überstreichen des Fahrzeugs dieses nicht nur in Längsrichtung ausmessen, sondern auch quer dazu.

Günstig ist es, wenn eine relativ zum Sender ortsfeste Reflexionsfläche als Kontrollfläche vorgesehen ist.

Bei einer bevorzugten Ausführungsform ist vorgesehen, daß der Sender den Strahl parallel zur Drehachse auf einen um die Drehachse rotierenden schrägen Spiegel richtet. Der Sender selber kann damit ortsfest gehalten werden, während ein in den Strahlengang eingeschalteter, letztlich einen Teil des Senders bildender Spiegel den Strahl über das Fahrzeug verschwenkt.

Dabei ist es günstig, wenn der Spiegel den Strahl um 90° ablenkt, so daß der Strahl in einer senkrecht auf der Drehachse stehenden Ebene verschwenkt wird, grundsätzlich wäre es aber auch möglich, davon verschiedene Winkel zu verwenden. Der Strahl würde dann nicht in einer senkrechten Ebene umlaufen, sondern längs einer Kegelfläche, und selbstverständlich wäre es ohne weiteres möglich, aus Laufzeit und Drehwinkel des Strahls die Stelle im Raum zu bestimmen, an der eine Reflexion erfolgt, die den Strahl in sich zurückwirft. Wenn die Neigung des schrägen Spiegels verstellt wird, wäre es auf diese Weise möglich, den Strahl quer zur Längsrichtung des Fahrzeugs in unterschiedlichen Positionen auf das Fahrzeug zu richten, so daß dieses bei wiederholtem Überstreichen nicht nur in Längsrichtung, sondern auch quer dazu ausgemessen würde.

Günstig ist es, wenn der Spiegel zwischen zwei Endstellungen oszillierend verdreht wird, dadurch wird beim Überstreichen Zeit gespart, da der Strahl vorzugsweise nur so weit verschwenkt wird, daß mit Sicherheit das Fahrzeug vollständig überstrichen wird.

Der Spiegel kann bei einer bevorzugten Ausführungsform eine sphärisch gekrümmte Oberfläche aufweisen, um Verluste bei der Reflexion der Strahlung zu vermindern.

Günstig ist es, wenn der Drehantrieb des Spiegels ein Schrittmotor ist. Dadurch läßt sich die Winkelstellung des Strahls in einfacher Weise bestimmen.

Eine andere Lösung sieht vor, daß der Antrieb des Spiegels eine Winkelmeßeinrichtung synchron zur Verschwenkung des Spiegels bewegt, beispielsweise eine elektronische Winkelmeßeinrichtung.

Die nachfolgende Beschreibung einer bevorzugten Ausführungsform der Erfindung dient im Zusammenhang mit der Zeichnung der näheren Erläuterung. Es zeigen:
- Figur 1:: Eine perspektivische Ansicht eines Portals einer Fahrzeugwaschanlage mit einer Sende- und Empfangseinrichtung für einen Abtaststrahl;
- Figur 2:: eine Seitenansicht des Portals der Figur 1 mit einem abzutastenden Fahrzeug und
- Figur 3:: eine schematische Seitenansicht der Sende- und Empfangseinrichtung gemäß Figur 1.

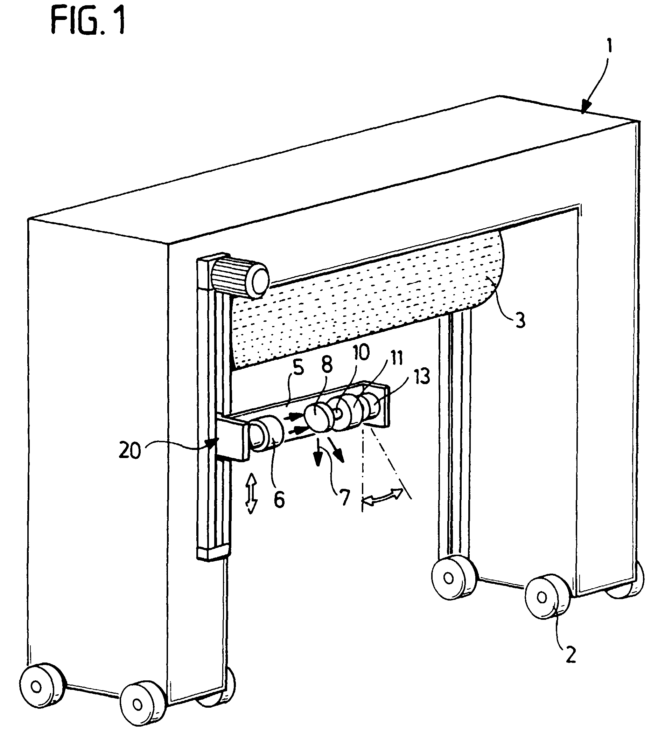

In Figur 1 ist ein Portal 1 dargestellt, das auf Rädern 2 längs einer Fahrbahn verfahrbar ist. Das Portal 1 trägt in an sich bekannter Weise eine Waschbürste 3, die von einer in der Zeichnung nicht dargestellten Steuerung höhenverstellbar ist, so daß sie der Kontur eines Fahrzeugs 4 folgen kann, das unter dem Portal vorbeibewegt wird.

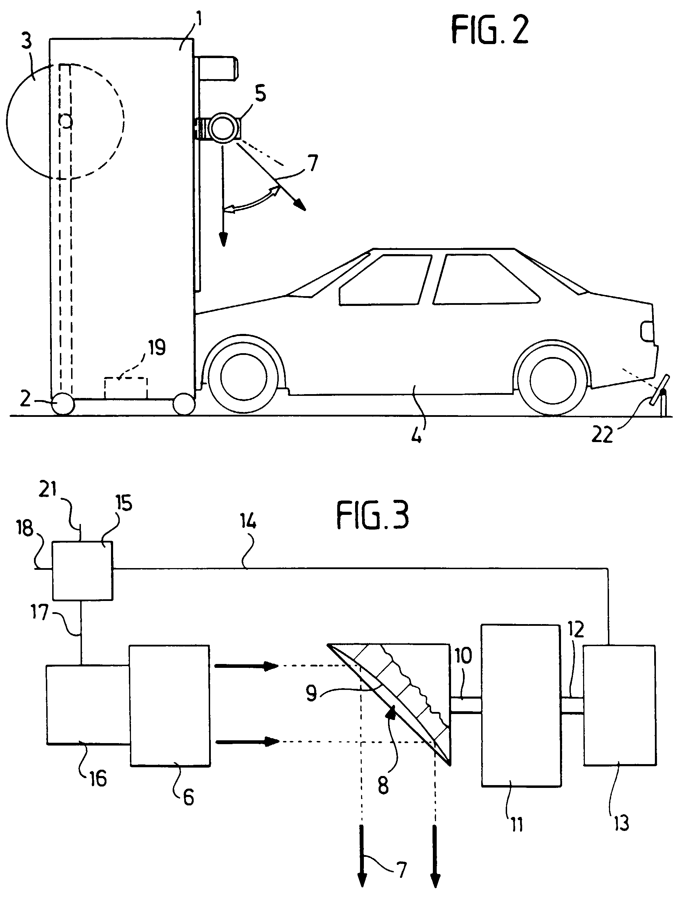

An dem Portal 1 ist zusätzlich an einem Halter 5 ein Ultraschallsender 6 angeordnet, der im dargestellten Ausführungsbeispiel in horizontaler Richtung und quer zur Fahrtrichtung des Portals 1 und des Fahrzeugs 4 einen Ultraschallstrahl 7 aussendet. Dieser trifft auf einen geneigten Spiegel 8 auf, dessen Neigung im dargestellten Ausführungsbeispiel so ausgebildet ist, daß der Ultraschallstrahl 7 um 90° abgelenkt wird ( Figur 3). Um Reflexionsverluste zu verhindern, ist der Spiegel 8 mit einer sphärisch gekrümmten Oberfläche ausgebildet. Er ist über eine Welle 10 mit einem Antriebsmotor 11 verbunden, der den Spiegel 8 um eine Drehachse verdreht, die parallel zur Richtung des aus dem Ultraschallsenders 6 austretenden Ultraschallstrahls 7 verläuft. Der Antriebsmotor 11 treibt über eine Welle 12 außerdem einen Winkelmesser 13 an, dessen Ausgangssignale über eine Signalleitung 14 einer Recheneinheit 15 zugeführt werden.

Der Ultraschallsender 6 ist gleichzeitig als Ultraschallempfänger ausgebildet, so daß in ihm ein Empfangssignal erzeugt wird, wenn Ultraschallstrahlung in umgekehrter Richtung zum ausgesandten Ultraschallstrahl 7 auf ihn auftrifft. Ein solches Empfangssignal führt in einer dem Empfänger zugeordneten Laufzeitmeßeinrichtung 16 dazu, daß die Zeit bestimmt wird, die der Ultraschallstrahl 7 von der Aussendung durch den Ultraschallsender 6 an benötigt hat, um wieder auf den als Empfänger wirkenden Ultraschallsender 6 aufzutreffen, das heißt in der Laufzeitmeßeinrichtung wird die gesamte Laufzeit der Ultraschallstrahlung vom Aussenden bis zum Empfangen bestimmt. Diese Laufzeit ist ein Maß für die Weglänge, die der Ultraschallstrahl 7 vom Sender über den Spiegel 8 zu einer Reflexionsfläche und wieder zum Empfänger zurück zurückgelegt hat. Ein dieser Laufzeit entsprechendes Signal wird über eine Empfangsleitung 17 ebenfalls der Recheneinheit 15 zugeleitet. Die Recheneinheit 15 steht auch über eine Positionsleitung 18 mit einer Positionsmeßeinrichtung 19 in Verbindung, die in Figur 2 nur gestrichelt dargestellt ist. Diese Positionsmeßeinrichtung 19 bestimmt die Relativposition des Fahrzeugs 4 zum Portal 1 und damit die Relativposition zwischen Ultraschallsender 6 einerseits und Fahrzeug 4 an- dererseits. Dies kann beispielsweise in an sich bekannter Weise dadurch erfolgen, daß der Zeitpunkt bestimmt wird, an dem die Vorderkante des Fahrzeugs 4 die Positionsmeßeinrichtung 19 erreicht. Von diesem Zeitpunkt an wird aufgrund einer Zeitmessung und bei konstanter Relativgeschwindigkeit zwischen Portal und Fahrzeug die jeweilige Position des Fahrzeugs relativ zum Portal bestimmt.

Der den Ultraschallsender und den Spiegel tragende Halter 5 kann am Portal 1 höhenverstellbar gelagert sein, wie dies in Figur 1 dargestellt ist. Die jeweilige Position längs dieser Höhenverstellung 20 kann ebenfalls durch eine geeignete Meßeinrichtung bestimmt werden, die in der Zeichnung nicht extra dargestellt ist. Die so gewonnenen Signale werden über eine Signalleitung 21 ebenfalls der Recheneinheit 15 zugeführt.

Wie aus der Darstellung der Figur 2 ersichtlich ist, ist längs der Fahrbahn eine feste Reflexionsfläche 22 angeordnet, die bei einer ganz bestimmten Position des Portals 1 den vom Ultraschallsender 6 ausgesandten Ultraschallstrahl 7 auf den Empfänger reflektiert. Wenn diese spezielle Position des Portals 1 bekannt ist, kann auf diese Weise kontrolliert werden, ob die Abstandsmessung des Ultraschallstrahls und die Winkelabmessung des Ultraschallstrahls stimmen, gegebenenfalls kann auf diese Weise eine Nachjustierung oder Eichung erfolgen.

Im folgenden wird die Konturerfassung eines Fahrzeugs 4 am Beispiel eines stationär gehaltenen Fahrzeugs und eines längs des Fahrzeugs bewegten Portals 1 beschrieben. Es versteht sich aber, daß es auch ohne weiteres möglich ist, das Portal festzuhalten und das Fahrzeug am Portal entlang zu bewegen, beispielsweise mittels eines mit konstanter Geschwindigkeit fahrenden Wagens oder einer Zugeinrichtung. Gegebenenfalls können auch Portal und Fahrzeug gleichzeitig in kontrollierter Weise gegeneinander bewegt werden.

Das Portal wird zunächst in einer Ausgangslage stehen und kann in dieser in der beschriebenen Weise die Korrektheit der Laufzeitmessung und der Winkelmessung des Ultraschallstrahls 7 überprüfen, sobald der Ultraschallstrahl auf die Reflexionsfläche 22 auftrifft. Diese ist so angeordnet, daß beim Verschwenken des Ultraschallstrahls 7 dieser bei einer bestimmten Winkelposition senkrecht auf die Reflexionsfläche 22 auftrifft, so daß der Ultraschallstrahl 7 auf den Empfänger reflektiert wird.

Sobald diese Überprüfung stattgefunden hat, wird das Portal 1 vorzugsweise mit konstanter Geschwindigkeit auf das Fahrzeug 4 zu bewegt und stellt beispielsweise mittels einer Lichtschranke fest, an welcher Stelle das Fahrzeug 4 beginnt. Bei der weiteren Bewegung des Portals 1 längs des Fahrzeugs 4 werden die Längskoordinaten des Portals 1 durch die Positionsmeßeinrichtung 19 bestimmt, so dap in jedem Zeitpunkt in der Recheneinheit 15 Daten vorliegen, die für die jeweilige Relativposition des Portals 1 zum Fahrzeug 4 repräsentativ sind.

Durch oszillierende Rotation des Spiegels 8 wird der Ultraschallstrahl 7 wiederholt verschwenkt und streicht dabei in einer Ebene, die senkrecht zur Drehachse des Spiegels verläuft, über das ganze Fahrzeug. Immer dann, wenn der Ultraschallstrahl 7 senkrecht auf die Oberfläche des Fahrzeugs 4 auftrifft, und dies kann an unterschiedlichen Stellen der Fall sein, werden der Winkel und die Laufzeit des Ultraschallstrahls 7 in der beschriebenen Weise bestimmt und der Recheneinheit 15 zugeführt. Die Recheneinheit kann aus diesen Daten die genaue Lage der Reflexionsstelle relativ zum Portal bestimmen. Da gleichzeitig Daten vorliegen, die die genaue Relativposition des Fahrzeugs relativ zum Portal 1 angeben, lassen sich dadurch auch Datensätze ermitteln, die die genauen Koordinaten der Reflexionsstelle in Fahrzeuglängsrichtung angeben. Da die Reflexionsstelle an der Oberfläche des Fahrzeugs liegt, ergibt sich damit eine punktuelle Ausmessung einer Oberflächenstelle.

Dieser Vorgang wiederholt sich an jeder Stelle, an der der Strahl von der Oberfläche in sich reflektiert wird. Durch die Bewegung des Portals 1 relativ zum Fahrzeug 4 erfolgt eine solche Reflexion des Ultraschallstrahls um 180° an den unterschiedlichsten Stellen der Fahrzeugoberfläche, so daß auf diese Weise diese Oberfläche bei einem vollen Durchgang punktweise ausgemessen wird. Die erhaltenen Meßdaten werden dann in der Recheneinheit 15 gespeichert und gegebenenfalls interpoliert, so daß man die Oberfläche des Fahrzeugs insgesamt mit hoher Genauigkeit ausmessen kann. Die so gewonnenen Konturdaten lassen sich anschließend bei den Bearbeitungsgängen verwenden, beispielsweise bei der Steuerung der Höhe der Waschbürste 3 sowie bei der Heranführung von Spritzdüsen, Trocknungsdüsen etc.

Bei dem dargestellten Ausführungsbeispiel erfolgt das Verschwenken des Ultraschallstrahls 7 immer in derselben Ebene. Es wäre grundsätzlich auch möglich, den Ultraschallsender 6 zusätzlich noch parallel zur Drehachse verschiebbar am Portal zu lagern, so daß bei verschiedenen Verschwenkvorgängen der Ultraschallstrahl 7 in verschiedenen nebeneinander liegenden Ebenen über das Fahrzeug läuft. Dadurch wäre es möglich, auch quer zur Verschieberichtung des Portals eine Ausmessung der Oberfläche vorzunehmen, wenn gleichzeitig die jeweilige Position des Senders und damit der überstrichenen Schwenkebene des Ultraschallstrahls 7 gemessen und der Recheneinheit 15 übermittelt wird.

Selbstverständlich ist eine entsprechende Konturerfassung nicht nur an der Oberseite des Fahrzeugs möglich, wie dies in der Zeichnung dargestellt ist, sondern durch geeignete Anordnung entsprechender Sende-Empfangseinheiten auch an den Seitenflächen.

## Patentansprüche

1. Verfahren zur Konturerfassung eines Fahrzeugs für eine Fahrzeugreinigungsanlage, bei dem ein Sender eine Strahlung in Richtung auf das Fahrzeug aussendet, die von einem relativ zum Sender in unveränderlicher Lage angeordneten Empfänger aufgenommen wird, und bei dem das Fahrzeug und der Sender unter Erfassung der jeweiligen Koordinaten ihrer Relativposition relativ zueinander verschoben werden, wobei die Strahlung bei unterschiedlichen Relativpositionen des Senders und des Fahrzeugs von diesem unterschiedlich beeinflußt wird, dadurch gekennzeichnet, daß der Sender einen Strahl aussendet, der um eine Drehachse verschwenkt wird und der bei dieser Verschwenkbewegung das Fahrzeug abtastet, daß der Empfänger so angeordnet wird, daß er den Strahl nur empfängt, wenn dieser nach Reflexion an der Oberfläche des Fahrzeugs entgegengesetzt zu seiner Aussenderichtung reflektiert wird, daß man bei jedem Auftreffen von Strahlung auf den Empfänger aus der Laufzeit des Strahls zwischen Sender und Empfänger und aus dem momentanen Verschwenkwinkel des Strahls die Koordinaten des Orts der Reflexion relativ zum Sender bestimmt und daß man aus diesen Koordinaten und den momentanen Koordinaten des Fahrzeugs relativ zum Sender den Ort der Reflexion am Fahrzeug bestimmt und abspeichert.

2. Verfahren nach Anspruch 1, dadurch gekennzeichnet, daß man den Strahl um eine Drehachse verschwenkt, die in einer senkrecht zur Richtung der Relativverschiebung zwischen Sender und Fahrzeug stehenden Ebene liegt.

3. Verfahren nach Anspruch 1 oder 2, dadurch gekennzeichnet, daß man als Strahlung Ultraschallstrahlung verwendet.

4. Verfahren nach einem der voranstehenden Ansprüche, dadurch gekennzeichnet, daß man Sender und Empfänger stationär anordnet und das Fahrzeug an ihnen vorbeibewegt, wobei der vom Sender ausgesandte Strahl das Fahrzeug vollständig überstreicht.

5. Verfahren nach einem der voranstehenden Ansprüche, dadurch gekennzeichnet, daß man den Strahl mehrfach über das Fahrzeug schwenkt.

6. Verfahren nach einem der voranstehenden Ansprüche, dadurch gekennzeichnet, daß man den Strahl zusätzlich zu Kontrollzwecken auf einen relativ zu Sender und Empfänger stationären Reflektor richtet, der den Strahl in sich reflektiert.

7. Verfahren nach einem der voranstehenden Ansprüche, dadurch gekennzeichnet, daß man die Verschwenkbewegung des Strahls durch einen verschwenkbaren Spiegel erzeugt.

8. Vorrichtung zur Erfassung der Kontur eines Fahrzeugs mit einem eine Strahlung in Richtung auf das Fahrzeug aussendenden Sender, einem die Strahlung aufnehmenden relativ zum Sender in unveränderlicher Lage angeordneten Empfänger, einer Positionsmeßeinrichtung zur Bestimmung der jeweiligen Position des Fahrzeugs relativ zum Sender und einer Recheneinheit, der die bei einer Relativverschiebung zwischen Sender und Fahrzeug durch das Fahrzeug unterschiedlich beeinflußten Ausgangssignale des Empfängers und die der Relativposition des Senders und des Fahrzeugs entsprechenden Ausgangssignale der Positionsmeßeinrichtung zugeführt werden, dadurch gekennzeichnet, daß der Sender (6) durch einen Drehantrieb derart um eine Drehachse verschwenkt wird, daß der Strahl (7) das Fahrzeug (4) dabei überstreicht, daß der Empfänger so relativ zum Sender (6) angeordnet ist, daß er nur dann Strahlung empfängt, wenn der Strahl (7) entgegengesetzt zu seiner Aussenderichtung reflektiert wird, daß eine Winkelmeßeinrichtung (13) für den Verschwenkwinkel des Strahls (7) und eine Laufzeitmeßeinrichtung (16) für den vom Sender (6) zum Empfänger gelangenden Strahl (7) vorgesehen sind, deren Ausgangssignale der Recheneinheit (15) zugeführt werden, und daß in dieser beim Auftreffen von Strahlung auf den Empfänger aus den Momentanwerten der Winkelmeßeinrichtung (13), der Laufzeitmeßeinrichtung (16) und der Positionsmeßeinrichtung (19) der Ort der Reflexion am Fahrzeug (4) bestimmt und gespeichert wird.

9. Vorrichtung nach Anspruch 8, dadurch gekennzeichnet, daß die Drehachse in einer senkrecht zur Richtung einer Relativverschiebung zwischen Sender (6) und Fahrzeug (4) stehenden Ebene liegt.

10. Vorrichtung nach Anspruch 8 oder 9, dadurch gekennzeichnet, daß der Sender (6) ein Ultraschallsender ist.

11. Vorrichtung nach einem der Ansprüche 8 bis 10, dadurch gekennzeichnet, daß Sender (6) und Empfänger am selben Ort angeordnet sind.

12. Vorrichtung nach einem der Ansprüche 8 bis 11, dadurch gekennzeichnet, daß Sender (6) und Empfänger in einer senkrecht auf der Verschieberichtung von Fahrzeug (4) und Sender (6) stehenden Ebene zusätzlich verschiebbar sind und daß auch diese Position durch die Positionsmeßeinrichtung erfaßt werden.

13. Vorrichtung nach einem der Ansprüche 8 bis 12, dadurch gekennzeichnet, daß eine relativ zum Sender (6) ortsfeste Reflexionsfläche (22) als Kontrollfläche vorgesehen ist.

14. Vorrichtung nach einem der Ansprüche 8 bis 13, dadurch gekennzeichnet, daß der Sender (6) den Strahl (7) parallel zur Drehachse auf einen um die Drehachse rotierenden schrägen Spiegel (8) richtet.

15. Vorrichtung nach Anspruch 14, dadurch gekennzeichnet, daß der Spiegel (8) den Strahl (7) um 90° ablenkt.

16. Vorrichtung nach einem der Ansprüche 14 oder 15, dadurch gekennzeichnet, daß der Spiegel (8) zwischen zwei Endstellungen oszillierend verdreht wird.

17. Vorrichtung nach einem der Ansprüche 14 bis 16, dadurch gekennzeichnet, daß der Spiegel (8) eine sphärisch gekrümmte Oberfläche (9) aufweist.

18. Vorrichtung nach einem der Ansprüche 14 bis 17, dadurch gekennzeichnet, daß der Drehantrieb (11) des Spiegels (8) ein Schrittmotor ist.

19. Vorrichtung nach einem der Ansprüche 14 bis 17, dadurch gekennzeichnet, daß der Antrieb (11) des Spiegels (8) eine Winkelmeßeinrichtung (13) synchron zur Verschwenkung des Spiegels (8) bewegt.

## Claims

1. A method of detecting the contour of a vehicle for a vehicle-cleaning plant, in which a transmitter emits radiation in the direction towards the vehicle, the radiation being received by a receiver arranged in an immovable position relative to the transmitter, and in which the vehicle and the transmitter are moved relative to each other while detecting the respective coordinates of their relative position, wherein the radiation is affected differently by the vehicle at different relative positions of the transmitter and the vehicle, **characterized in that** the transmitter emits a beam which is deflected about an axis of rotation and which scans the vehicle during this deflected movement, the receiver is arranged in such a way that it receives the beam only when the latter - after being reflected on the surface of the vehicle - is reflected opposite to its direction of emission, each time the radiation encounters the receiver the coordinates of the point of reflexion relative to the transmitter are determined from the travel time of the beam between the transmitter and the receiver and from the momentary deflexion angle of the beam, and the point of reflexion on the vehicle is determined from the said coordinates and the momentary coordinates of the vehicle relative to the transmitter and is stored.

2. A method according to Claim 1, **characterized in that** the beam is deflected about an axis of rotation which lies in a plane situated at a right angle to the direction of the relative movement between the transmitter and the vehicle.

3. A method according to Claim 1 or 2, **characterized in that** ultrasound radiation is used as the radiation.

4. A method according to one of the preceding Claims, **characterized in that** the transmitter and the receiver are arranged in a stationary manner and the vehicle moves past them, wherein the beam emitted by the transmitter scans the vehicle completely.

5. A method according to one of the preceding Claims, **characterized in that** the beam is deflected several times over the vehicle.

6. A method according to one of the preceding Claims, **characterized in that** for control purposes the beam is additionally directed onto a reflector which is stationary relative to the transmitter and the receiver and which reflects the beam into itself.

7. A method according to one of the preceding Claims, **characterized in that** the deflected movement of the beam is produced by a pivotable mirror.

8. A device for detecting the contour of a vehicle, with a transmitter emitting radiation in the direction towards the vehicle, a receiver receiving the radiation and arranged in an immovable position relative to the transmitter, a position-measuring device for determining the respective position of the vehicle relative to the transmitter, and a calculating unit to which are supplied the output signals of the receiver, which are affected differently by the vehicle during relative movement between the transmitter and the vehicle, and the output signals of the position-measuring device, which correspond to the relative position of the transmitter and the vehicle, **characterized in that** the transmitter (6) is pivoted by a rotary drive about an axis of rotation in such a way that the beam (7) scans the vehicle (4), the receiver is arranged in such a way relative to the transmitter (6) that it receives radiation only when the beam (7) is reflected opposite to its direction of emission, an angle-measuring device (13) for the deflected angle of the beam (7) and a travel-time-measuring device (16) for the beam (7) reaching the receiver from the transmitter (6) are provided, the output signals of which (devices) are supplied to the calculating unit (15), and when radiation encounters the receiver the point of reflexion on the vehicle (4) is determined in the said calculating unit (15) from the momentary values of the angle-measuring device (13), the travel-time-measuring device (16) and the position-measuring device (19) and is stored.

9. A device according to Claim 8, **characterized in that** the axis of rotation lies in a plane situated at a right angle to the direction of a relative movement between the transmitter (6) and the vehicle (4).

10. A device according to Claim 8 or 9, **characterized in that** the transmitter (6) is an ultrasound transmitter.

11. A device according to one of Claims 8 to 10, **characterized in that** the transmitter (6) and the receiver are arranged at the same point.

12. A device according to one of Claims 8 to 11, **characterized in that** the transmitter (6) and the receiver are additionally movable in a plane situated at a right angle to the direction of movement of the vehicle (4) and the transmitter (6), and this position is also detected by the position-measuring device.

13. A device according to one of Claims 8 to 12, **characterized in that** a reflexion surface (22) which is stationary relative to the transmitter (6) is provided as a control surface.

14. A device according to one of Claims 8 to 13, **characterized in that** the transmitter (6) directs the beam (7) parallel to the axis of rotation onto an oblique mirror (8) rotating about the axis of rotation.

15. A device according to Claim 14, **characterized in that** the mirror (8) deflects the beam (7) through 90°.

16. A device according to one of Claims 14 [and] 15, **characterized in that** the mirror (8) is rotated in an oscillating manner between two end positions.

17. A device according to one of Claims 14 to 16, **characterized in that** the mirror (8) has a spherically curved surface (9).

18. A device according to one of Claims 14 to 17, **characterized in that** the rotary drive (11) of the mirror (8) is a stepping motor.

19. A device according to one of Claims 14 to 17, **characterized in that** the drive (11) of the mirror (8) moves an angle-measuring device (13) in synchronism with the pivoting of the mirror (8).

## Revendications

1. Procédé de détection du contour d'un véhicule pour une station de lavage de véhicules, dans lequel un émetteur émet un rayonnement en direction du véhicule, qui est reçu par un récepteur disposé en position fixe par rapport à l'émetteur, et dans lequel le véhicule et l'émetteur sont déplacés relativement l'un à l'autre par détection des coordonnées respectives de leur position relative, le rayonnement étant influencé différemment par celui-ci pour des positions relatives différentes de l'émetteur et du véhicule, caractérisé en ce que l'émetteur émet un rayon, qui pivote autour d'un axe de rotation et qui explore le véhicule lors de ce pivotement, en ce que le récepteur est disposé de sorte qu'il reçoit seulement le rayon, lorsque celui-ci est réfléchi après réflexion sur la surface du véhicule dans la position opposée à sa direction d'émission, en ce que, lors de chaque incidence du rayonnement sur le récepteur, à partir du temps de transit du rayon entre l'émetteur et le récepteur et à partir de l'angle de pivotement instantané du rayon, sont déterminées les coordonnées de l'endroit de la réflexion par rapport à l'émetteur et en ce qu'à partir de ces coordonnées et des coordonnées instantanées du véhicule par rapport à l'émetteur, est déterminé et mémorisé l'endroit de la réflexion sur le véhicule.

2. Procédé selon la revendication 1, caractérisé en ce que le rayon pivote autour d'un axe de rotation, qui se trouve dans un plan perpendiculaire à la direction du déplacement relatif entre l'émetteur et le véhicule.

3. Procédé selon la revendication 1 ou 2, caractérisé en ce qu'on utilise en tant que rayonnement un rayonnement ultrasonique.

4. Procédé selon l'une quelconque des revendications précédentes, caractérisé en ce que l'émetteur et le récepteur sont disposés stationnaires et le véhicule se déplace devant eux, le rayon émis par l'émetteur balayant complètement le véhicule.

5. Procédé selon l'une quelconque des revendications précédentes, caractérisé en ce que le rayon pivote plusieurs fois au-dessus du véhicule.

6. Procédé selon l'une quelconque des revendications précédentes, caractérisé en ce qu'on dirige le rayon en plus à des fins de contrôle sur un réflecteur stationnaire par rapport à l'émetteur et au récepteur, qui réfléchit le rayon sur lui-même.

7. Procédé selon l'une quelconque des revendications précédentes, caractérisé en ce que le mouvement de pivotement du rayon est généré par un miroir pivotant.

8. Dispositif de détection du contour d'un véhicule équipé d'un émetteur émettant un rayonnement en direction du véhicule, d'un récepteur disposé en position fixe par rapport à l'émetteur recevant le rayonnement, d'un dispositif de mesure de position en vue de la détermination de la position respective du véhicule par rapport à l'émetteur et d'une unité de calcul, à laquelle sont appliqués les signaux de sortie du récepteur influencés différemment par le véhicule lors d'un déplacement relatif entre l'émetteur et le véhicule et les signaux de sortie du dispositif de mesure de position correspondant à la position relative de l'émetteur et du véhicule, caractérisé en ce que l'émetteur (6) est entraîné en pivotement autour d'un axe de rotation par un entraînement rotatif, en ce que le rayon (7) balaie alors le véhicule (4), en ce que le récepteur est disposé par rapport à l'émetteur (6) de sorte qu'il reçoit uniquement un rayonnement lorsque le rayon (7) est réfléchi dans la direction opposée à sa direction d'émission, en ce qu'un dispositif de mesure d'angle (13) pour l'angle de pivotement du rayon (7) et un dispositif de mesure de temps de transit (16) pour le rayon (7) parvenant depuis l'émetteur (6) au récepteur sont prévus, dont les signaux de sortie sont appliqués à l'unité de calcul (15) et en ce que dans celle-ci, lors de l'incidence du rayonnement sur le récepteur, est déterminé et mesuré, à partir des valeurs instantanées de mesure d'angle (13), du dispositif de mesure de temps de transit (16) et du dispositif de mesure de position (19), l'endroit de la réflexion sur le véhicule (4).

9. Dispositif selon la revendication 8, caractérisé en ce que l'axe de rotation se trouve dans un plan perpendiculaire à la direction d'un déplacement relatif entre l'émetteur (6) et le véhicule (4).

10. Dispositif selon la revendication 8 ou 9, caractérisé en ce que l'émetteur (6) est un émetteur d'ultrasons.

11. Dispositif selon l'une quelconque des revendications 8 à 10, caractérisé en ce que l'émetteur (6) et le récepteur sont disposés au même endroit.

12. Dispositif selon l'une quelconque des revendications 8 à 11, caractérisé en ce que l'émetteur (6) et le récepteur sont en outre déplaçables dans un plan perpendiculaire à la direction de déplacement du véhicule (4) et de l'émetteur (6) et en ce que ces positions sont également détectées par le dispositif de mesure de position.

13. Dispositif selon l'une quelconque des revendications 8 à 12, caractérisé en ce qu'une surface de réflexion (22) fixe par rapport à l'émetteur (6) est prévue en tant que surface de contrôle.

14. Dispositif selon l'une quelconque des revendications 8 à 13, caractérisé en ce que l'émetteur (6) dirige le rayon (7) parallèlement à l'axe de rotation sur un miroir (8) oblique tournant autour de l'axe de rotation.

15. Dispositif selon la revendication 14, caractérisé en ce que le miroir (8) dévie le rayon (7) de 90°.

16. Dispositif selon l'une quelconque des revendications 14 ou 15, caractérisé en ce que le miroir (8) est tourné de façon oscillante entre deux positions extrêmes.

17. Dispositif selon l'une quelconque des revendications 14 à 16, caractérisé en ce que le miroir (8) présente une surface courbe sphérique (9).

18. Dispositif selon l'une quelconque des revendications 14 à 17, caractérisé en ce que l'entraînement en rotation (11) du miroir (8) est un moteur pas à pas.

19. Dispositif selon l'une quelconque des revendications 14 à 17, caractérisé en ce que l'entraînement (11) du miroir (8) déplace un dispositif de mesure d'angle (13) en synchronisme avec le pivotement du miroir (8).
